# DEMANDE DE BREVET EUROPEEN

(11) **EP 1 857 256 A1**
(43) Date de publication de la demande: **21.11.2007**
(21) Numéro de dépôt: 06114292.3
(22) Date de dépôt: 20.05.2006
(51) Int. Cl.: B29C 65/02, B65D 35/10

(54) **Procédé et dispositif pour l'assemblage de composants de tubes d'emballage**

(71) Demandeur: Aisapack Holding SA, 1896 Vouvry (CH)
(72) Inventeur: Favre, Dominique, 1896 Vouvry (CH); Keller, Gerhard, 1896 Vouvry (CH)
(74) Mandataire: Grosfillier, Philippe

(57) **Abrégé**

La présente invention concerne un procédé et un dispositif pour l'assemblage de composants de tubes en matière plastique comprenant la fixation d'un élément semi-rigide (1), tel que fond, sur la paroi interne d'une jupe souple (2). Ledit procédé est caractérisé par le fait que lors de son introduction à l'intérieur de la jupe (2), l'élément semi-rigide (1) se situe dans un plan oblique par rapport à l'axe principal de la jupe (2) et qu'une fois complètement introduit à l'intérieur de celle-ci, on le redresse de manière à ce qu'il se situe dans un plan perpendiculaire à l'axe principal de la jupe (2) puis on le ramène à l'endroit où il doit être fixé à la jupe (2). Le dispositif comprend des moyens qui permettent de mettre en oeuvre le procédé précité.

## Description

### Domaine de l'invention

L'invention se situe dans le domaine de la fabrication d'emballages tubulaires souples en matière plastique.
Elle concerne plus particulière la fixation d'un élément semi-rigide, tel que fond, sur la paroi interne d'un élément tubulaire.

### Etat de la technique

Il existe des emballages en matière plastique constitués d'une jupe souple fabriquée à partir d'un film enroulé qui comporte une soudure longitudinale.
Un fond semi-rigide de section légèrement inférieure à la section de la jupe est fixé à celle-ci, au niveau de sa paroi interne.

Un exemple de procédé classique de fabrication est décrit ci-dessous :
a) Déroulement et calibrage par coupe des bords du film (rouleaux) pour la formation de jupes souples.
b) Mise en forme du film autour d'un mandrin tubulaire et soudure longitudinale.
c) Découpe de tube formé et soudé en des jupes de longueur correspondante à la décoration (print) de l'emballage.
d) Transfert des jupes dans une première tourelle pour l'opération d'assemblage et de soudage d'un goulot sur la jupe sur des stations successives.
e) Décharge du produit semi-fini de la première tourelle et transfert dans une deuxième tourelle pour l'opération d'assemblage et de soudage du fond sur l'extrémité libre de la jupe sur des stations successives. Une rotation de 180° du produit semi-fini est intégrée dans le transfert et se fait simultanément.
f) Déchargement du produit fini.

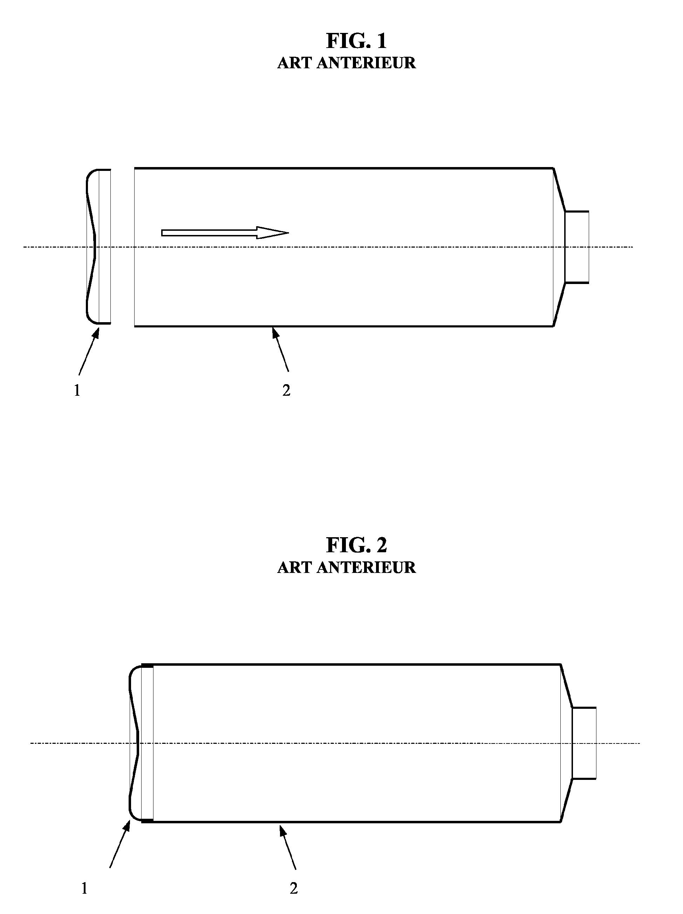

Le fond **1** avec une géométrie comme illustrée dans la Fig.1 doit être introduit dans un emballage tubulaire semi-fini **2** (jupe déjà soudée sur un goulot) afin d'être soudé à l'extrémité ouverte de ce dernier.
Sur sa zone de recouvrement avec la jupe **2 ,** la périphérie du fond **1** doit être de forme identique à la forme de la paroi interne de la jupe **2,** ceci afin d'éviter des fentes ou des volumes morts entre le fond **1** et la jupe **2.** De telles espaces étant très difficiles à rincer lors du remplissage aseptique.
Dans le même souci de minimiser les aspérités, le diamètre extérieur du fond est très légèrement inférieur au diamètre intérieur de la jupe. Cette différence est p.ex. de l'ordre de 0.1 mm, ce qui permet de garantir une bonne tenue géométrique (pas de plis) et une bonne résistance mécanique de la soudure thermique.
Comme on peut le constater sur la figure 1, lors de son déplacement pour être fixé à la jupe **2,** le fond **1** se situe toujours dans un plan perpendiculaire à l'axe principal de la jupe **2.**
Le risque d'accrochage entre le fond **1** et la jupe **2** est très élevé, surtout à cause du fait que cette opération se fait sur une machine automatique et l'alignement des fonds **1** et des jupes **2** n'est pas toujours parfaitement garanti.
Un autre risque lié à l'utilisation d'une machine provient du fait que lors des diverses opérations d'assemblage et de soudage pour produire l'emballage fini, les jupes **2** avec goulot sont logées dans des fourreaux de transport. Pour exécuter la soudure du fond **1** sur l'extrémité libre de la jupe **2,** cette dernière doit dépasser le fourreau d'une distance suffisante pour accéder avec la tête de soudage. De ce fait, la jupe **2** étant en matière plastique relativement fin a tendance à se déformer, p.ex. de s'ovaliser, ce qui peut empêcher l'introduction du fond **1** à l'intérieur de la jupe **2.**

Il existe donc un besoin de remédier aux problèmes précités

### Exposé général de l'invention

Dans l'invention, la solution des problèmes précités consiste en un procédé d'assemblage de composants de tubes en matière plastique comprenant la fixation d'un élément semi-rigide, tel que fond, sur la paroi interne d'une jupe souple; ledit procédé étant caractérisé par le fait que lors de son introduction à l'intérieur de la jupe, l'élément semi-rigide se situe dans un plan oblique par rapport à l'axe principal de la jupe et qu'une fois complètement introduit à l'intérieur de celle-ci, on le redresse de manière à ce qu'il se situe dans un plan perpendiculaire à l'axe principal de la jupe puis on le ramène à l'endroit où il doit être fixé à la jupe.

Le procédé selon l'invention peut être utilisé pour fixer des éléments semi-rigide de formes variées, p.ex. circulaire, ovale ou polygonale.

L'élément semi-rigide peut être un fond, une pièce intermédiaire destinée à être fixée à l'intérieur d'un tube, entre le fond et la partie supérieure ou une pièce supérieure destinée à être fixée dans la partie supérieure du tube.

On notera ici que le procédé selon l'invention peut également utilisé pour l'introduction successive d'un fond, d'une pièce intermédiaire et d'une pièce supérieure ou selon un ordre inverse.

L'invention se rapporte également à un dispositif pour la mise en oeuvre du procédé tel que défini précédemment. Le dispositif selon l'invention se caractérise par le fait qu'il comprend des moyens adaptés pour introduire l'élément semi-rigide selon un plan oblique par rapport à l'axe principal de la jupe, des moyens pour redresser l'élément semi-rigide selon un plan perpendiculaire par rapport à l'axe principal de la jupe et des moyens pour ramener l'élément semi-rigide à l'endroit où il doit être fixé à la jupe.

N'importe quel type de systèmes permettant d'assurer les opérations décrites plus haut peut être utilisé dans le cadre de la présente invention.
De même, les moyens pour l'introduction, le redressement ou pour ramener l'élément semi-rigide, p.ex. des tiges munies d'organes de saisie, peuvent être disposés indifféremment à l'extérieur ou à l'intérieur de la jupe.

Il convient de relever que l'invention peut s'appliquer à n'importe quel type de jupe, en particulier à des jupes obtenues à partir d'un laminé enroulé, par extrusion ou par injection. Elle s'applique également à des jupes en structure plastique avec une ou plusieurs couches de carton obtenue(s) par une soudure longitudinale ou spiralée.

### Exposé détaillé de l'invention

L'invention est décrite plus en détail ci-après au moyen d'exemples illustrés par les figures suivantes :
La Fig.1 illustre la position (à plat, non inclinée) du fond avant l'introduction dans la jupe, conformément à un procédé de l'art antérieur.
La Fig.2 représente le même procédé que celui de la figure 1 mais avec le fond disposé dans le tube avant la soudure.
La Fig.3 illustre la position du fond incliné (oblique) avant l'introduction dans la jupe, conformément au procédé selon l'invention.
La Fig.4 illustre la position du fond incliné (oblique) complètement pénétrée dans la jupe.
La Fig.5 illustre la position du fond incliné (oblique) complètement pénétrée dans la jupe et redressé.
La Fig.6 illustre la position du fond redressé et reculé pour être souder à la jupe.

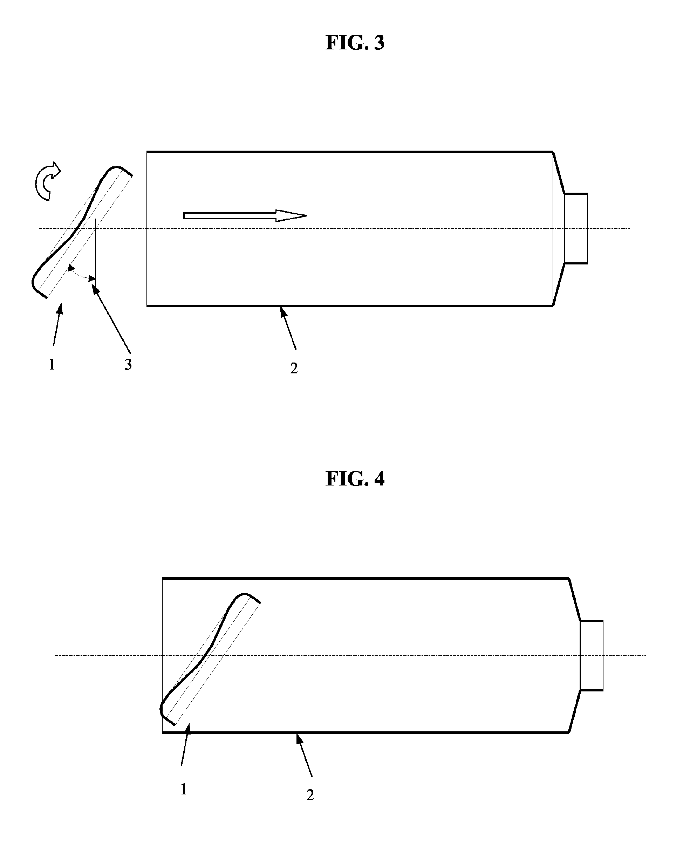

L'introduction oblique de l'élément semi-rigide **1** dans la jupe **2** (figures 3 et 4) réduit considérablement le risque d'accrochage de détérioration des composants consécutivement à leur mise en contact.

De préférence, le procédé et le dispositif selon l'invention sont conçus pour une introduction oblique de l'élément semi-rigide **1** qui se situe dans un plan dont l'inclinaison **3** varie entre 15 ° et 60 ° par rapport à l'axe principal de la jupe.

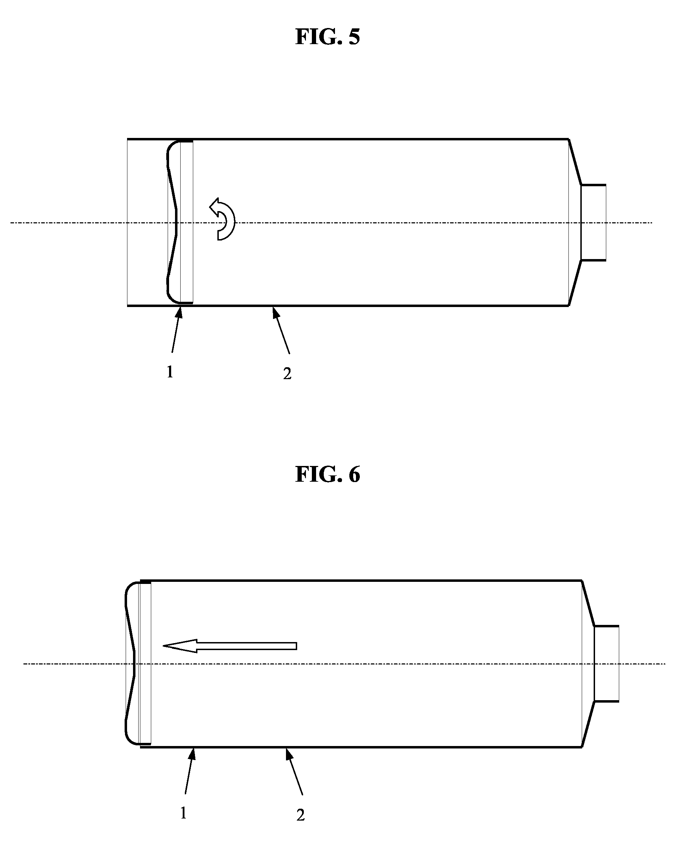

Le redressement en position verticale de l'élément semi-rigide **1** s'effectue à l'intérieur de la jupe **2** (figure 5).

Enfin, l'élément semi-rigide 1 est déplacé de manière à atteindre sa position définitive (figure 6) où il est fixé, p.ex. par soudage, à la jupe **2.** Plus précisément, la surface externe de l'élément semi-rigide **1** est fixée sur la paroi interne de la jupe **2.**

Il va sans dire que l'invention ne se limite pas aux exemples illustrés discutés précédemment.

## Revendications

1. Procédé d'assemblage de composants de tubes en matière plastique comprenant la fixation d'un élément semi-rigide (1), tel que fond, sur la paroi interne d'une jupe souple (2); ledit procédé étant **caractérisé par le fait que** lors de son introduction à l'intérieur de la jupe (2), l'élément semi-rigide (1) se situe dans un plan oblique par rapport à l'axe principal de la jupe (2) et qu'une fois complètement introduit à l'intérieur de celle-ci, on le redresse de manière à ce qu'il se situe dans un plan perpendiculaire à l'axe principal de la jupe (2) puis on le ramène à l'endroit où il doit être fixé à la jupe (2).

2. Procédé selon la revendication 1 utilisant un élément semi-rigide (1) de forme circulaire.

3. Procédé selon la revendication 1 utilisant un élément semi-rigide (1) de forme ovale.

4. Procédé selon la revendication 1 utilisant un élément semi-rigide (1) de forme polygonale.

5. Procédé selon l'une quelconque des revendications précédentes **caractérisé en ce que** l'élément semi-rigide (1) est un fond de tube.

6. Procédé selon l'une quelconque des revendications précédentes **caractérisé en ce que** l'élément semi-rigide (1) est un élément intermédiaire destiné à être fixé à l'intérieur d'un tube, entre le fond et la partie supérieure.

7. Procédé selon l'une quelconque des revendications précédentes **caractérisé en ce que** l'élément semi-rigide (1) est un élément supérieur destiné à être fixé dans la partie supérieure du tube.

8. Dispositif pour la mise en oeuvre du procédé tel que défini dans l'une quelconque des revendications précédentes **caractérisé par le fait qu'**il comprend des moyens adaptés pour introduire l'élément semi-rigide selon un plan oblique par rapport à l'axe principal de la jupe (2), des moyens pour redresser l'élément semi-rigide (1) selon un plan perpendiculaire par rapport à l'axe principal de la jupe (2) et des moyens pour ramener l'élément semi-rigide à l'endroit où il doit être fixé à la jupe (2).
